# EUROPEAN PATENT APPLICATION

(11) **EP 2 829 758 A1**
(43) Date of publication of application: **28.01.2015**
(21) Application number: 13306049.1
(22) Date of filing: 22.07.2013
(51) Int. Cl.: F16C 43/06

(54) **Slewing bearing with split ring**

(71) Applicant: Aktiebolaget SKF, 41550 Göteborg (SE)
(72) Inventor: Bouron, Cyril, 89200 Avallon (FR); Magny, Jean-Baptiste, 89580 Migé (FR); Capoldi, Bruno, 89580 Charentenay (FR); Ovize, Pascal, 89530 Chitry-le-Fort (FR); Noirot, Baptiste, 89200 Avallon (FR)
(74) Representative: Kohl, Thomas

(57) **Abstract**

The invention relates to a Slewing bearing including an inner ring (10) and an outer ring (12), wherein at least the inner ring (10) or the outer ring (12) is formed as a split ring formed by combining a first split ring (16) and at least one second split ring (18), wherein each of the split rings is provided with a plurality of mating through-holes (22, 24) and wherein the first split ring (16) and the second split ring (18) are joined by bolts (28) fitted into pairs of corresponding through-holes (22, 24).

It is proposed that at least one of the through-holes (20) in the first split ring (16) has a larger bore diameter than the corresponding through-hole in the second split ring (18).

In order to solve the problem of the existing art, where the mating through-holes may not be perfectly aligned such that it may become necessary to initiate a laborious, time and cost consuming reworking step, the invention facilitates the assembly and avoids reworking processes due to the use of at least one thorough-hole with a larger diameter.

## Description

The invention relates to a slewing bearing with a split outer ring or with a split inner ring being joined with bolts fitted into pertinent through-holes.

Slewing bearings are large-size rolling bearings that can accommodate axial, radial and moment loads acting either singly or in combination and in any direction. They are configured to perform to both slewing (oscillating) movements as well as rotational movements with typically slow revolution speeds.

In particular, the invention relates to a slewing bearing comprising an inner ring and an outer ring and at least one row of rolling elements such as balls or cylindrical rollers. One of the rings usually incorporates a gear.

In many fields of applications, one of the rings is formed as a split ring including a first split ring and a second split ring forming two parts of a ring. The rings include through-holes not only for attaching the bearing to other components but in the case of a bearing with split rings also for joining the two parts of the ring together in a reliable manner.

In the case of a split ring, the preferably axial through-holes provided in each of the split rings are pairwise aligned with a mating through-hole in the other split ring, respectively.

Due to unavoidable tolerances, thermal deformations or the like, the mating through-holes in the split rings may not be perfectly aligned such that it may become necessary to rework these holes during assembly.

This reworking step is laborious and interrupts the assembly process and leads to increased costs of the overall bearing.

It is an object of the invention to solve the above problems. This object is achieved by a slewing bearing according to claim 1. Further advantageous embodiments of the invention can be derived from the dependent claims.

The invention starts from a slewing bearing including an inner ring and an outer ring, wherein at least one of the inner ring and the outer ring is formed as a split ring. The split ring includes a first split ring and a second split ring. In the case of a double-row roller bearing, each of the split rings is provided with a raceway. The first split ring and the second split ring are provided with a plurality of through-holes, wherein each of the through-holes mates with a corresponding through-hole in the other split ring respectively such that the through-holes may be pairwise aligned when putting the split rings together and that bolts for connecting the split rings can be fitted through the aligned through-holes.

It is proposed that at least one of the through-holes in the first split ring has a diameter which is larger than the corresponding through-hole in the second split ring. The first split ring may be the upper part of the split ring or the lower part of the split ring and the split ring may be the inner ring or the outer ring of the bearing.

The use of at least one through-hole with a larger diameter facilitates the assembly and avoids reworking the through-holes in cases where the alignment is not perfect due to tolerances. The overall costs can be reduced and the process may be facilitated.

In a preferred embodiment, all of the through-holes in the first ring have a larger diameter than the corresponding through-holes in the second ring, respectively.

Further, it is proposed that the through-hole in the first ring is at least 5 % larger than the through-hole in the second ring, wherein the diameter of the through-hole in the second ring is defined as 100 %. This ensures a reliable improvement of the assembly process and avoids a reworking of the through-hole with a sufficient degree of certainty while at the same time making sure that the precision is not degraded.

In typical applications e.g. for construction machines, typical diameters of the through-holes amount approximately 40 mm (a range between 30 mm and 50 mm). In this case, it is proposed that the diameter of the through-hole in the first ring is at least 2 mm larger than the diameter of the corresponding hole in the second ring.

In a preferred embodiment of the invention, the slewing bearing is formed as a row roller bearing, preferably including an inner ring with a T-shaped profile, two rows of cylindrical rollers supporting axial and moment loads and one row of smaller cylindrical rollers for radial loads.

The above description of the invention as well as the appended claims, figures and the following description of preferred embodiments of the invention show multiple advantageous features of the invention in specific combinations. The skilled person will easily be able to consider further combinations or sub-combinations of these features in order to adapt the invention as defined in the claims to his or her specific needs.

### Brief description of the drawings

- Fig. 1: is a sectional view of a slewing bearing according to the invention and
- Fig. 2: is a sectional view of two split rings of the slewing bearing according to the invention without bolts.

### Detailed description of the embodiments

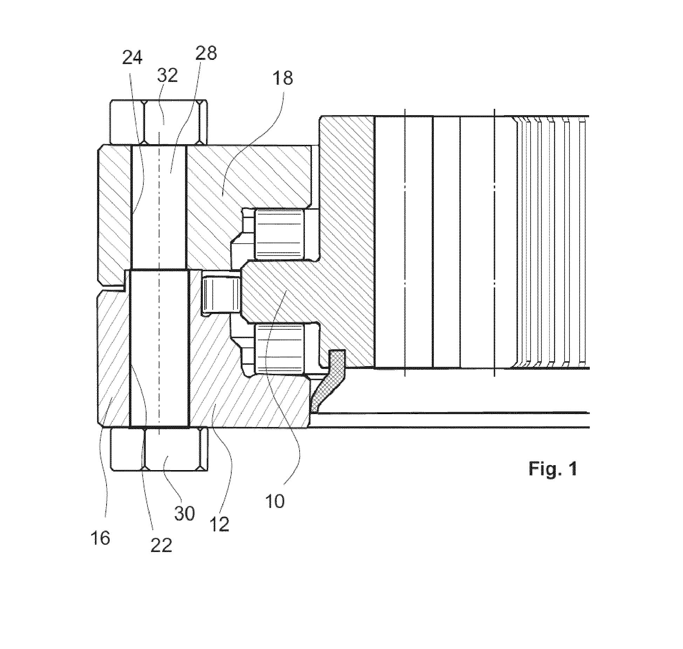

Fig. 1 shows a slewing bearing in a sectional view. The slewing bearing comprises an inner ring 10 and an outer ring 12. The inner ring 10 has an essentially T-shaped profile with two raceways oriented in axially opposite directions and a radially inner surface formed as an internal gear 14.

The outer ring 12 is formed as a split ring and includes a first ring 16 and a second ring 18 stacked on top of one another in the axial direction.

Each of the rings 16-18 is provided with a plurality of through-holes 22, 24 forming a regular pattern which is symmetric to the rotation axis of the bearing, and the through-holes 22, 24 are mating or corresponding to one another in the sense that the split rings 16, 18 may be stacked in such a way that the through-holes 22, 24 are aligned and forming the through-holes extending axially through the entire outer ring.

The split rings 16, 18 are joined by fitting a bolt 28 through the aligned through-holes 22, 24. The bolt 28 is fixed by screw-nuts 30, 32 and washers on axial side faces of the outer ring 12. The bolt 28 is provided with threads on its two end portions for this purpose. The through-holes 22, 24 and the central portion of the bolt 28 are not provided with threads. The first split ring 16 and the second split ring 18 are provided with axially oriented raceways facing the raceways of the inner ring 10 respectively and configured to carry high axial loads. A further raceway is provided on the radially outer side of the inner ring 10 and on the radially inner side of the first ring 16. The radial raceways of the embodiment illustrated in Fig. 1 are designed for smaller cylindrical rollers, whereas the axial raceways are designed for larger cylindrical rollers guided in a cage.

The bore diameter D1 of the through-hole 22 in the first split ring 16 is larger than the bore diameter D2 of the through-hole 24 in the second split ring 18by more than 5 %.

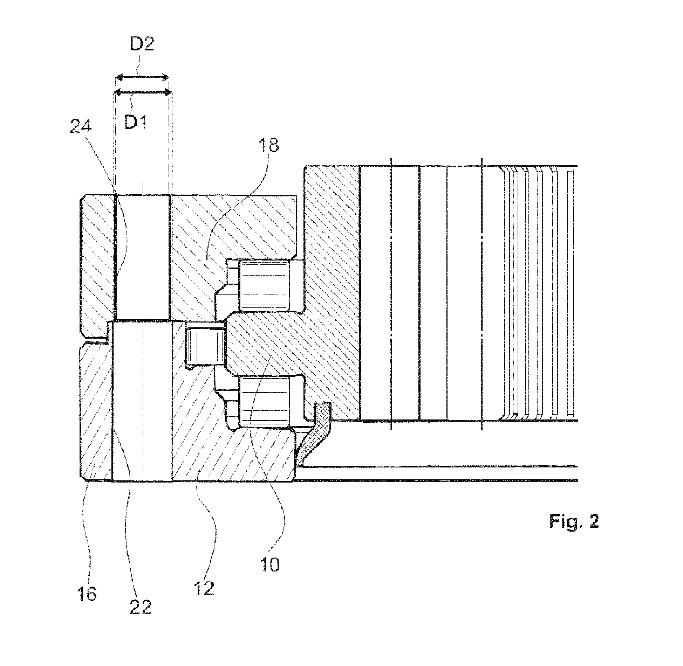

Fig. 2 is a sectional view of the first split ring 16 and the second split ring 18. In the embodiment illustrated, the bore diameter 22 of the first ring 16 is 41 mm and the bore diameter D2 of the through-hole 24 in the second split ring 18 amounts to 39 mm. The slewing bearing of Fig. 1 is a large-size slewing bearing with a bearing diameter of more than 1 m, preferably more than 2 m, e.g. for use in construction machines, medical applications such as MRT devices or in wind turbines, e.g. for axially supporting the nacelle of a wind turbine.

## Claims

1. Slewing bearing including an inner ring (10) and an outer ring (12), wherein at least the inner ring (10) or the outer ring (12) is formed as a split ring formed by combining a first split ring (16) and at least one second split ring (18), wherein each of the split rings is provided with a plurality of mating through-holes (22, 24) and wherein the first split ring (16) and the second split ring (18) are joined by bolts (28) fitted into pairs of corresponding through-holes (22, 24),
**characterized in that** at least one of the through-holes (20) in the first split ring (16) has a larger bore diameter than the corresponding through-hole in the second split ring (18).

2. Slewing bearing according to claim 1, wherein all of the through-holes (20, 22) in the first split ring (16) have a larger bore diameter than the corresponding through-holes in the second split ring (18).

3. Slewing bearing according to one of the preceding claims, **characterized in that** the through-holes (20, 22) are threadless.

4. Slewing bearing according to one of the preceding claims, **characterized in that** the bore diameter (D1) of the through-hole (20) in the first split ring (16) is at least 5 % larger than the bore diameter (D2) of the second through-hole (22) in the second split ring (18).

5. Slewing bearing according to one of the preceding claims, **characterized in that** the bore diameter in the first split ring is at least 2 mm larger than the bore diameter in the second split ring.

6. Slewing bearing according to one of the preceding claims, **characterized in that** the slewing bearing is formed as a triple row roller slewing bearing.

7. Slewing bearing according to one of the preceding claims, **characterized in that** the split ring is an outer ring (12) of a bearing.
